# EUROPÄISCHE PATENTANMELDUNG

(11) **EP 4 349 682 A2**
(43) Veröffentlichungstag der Anmeldung: **10.04.2024**
(21) Anmeldenummer: 23198204.2
(22) Anmeldetag: 19.09.2023
(51) Int. Cl.: B61C 17/04, B61C 17/06, B60L 5/00

(54) **MITTELFÜHRERHAUSLOKOMOTIVE**

(30) Priorität: 19.09.2022 DE 102022123984
(71) Anmelder: Vossloh Rolling Stock GmbH, 24107 Kiel (DE)
(72) Erfinder: BRÜNIG, Lennart, 24119 Kronshagen (DE); HILDEBRANDT, Tim, 24244 Felm (DE); SCHELSKE, Peter, 18195 Cammin (DE)
(74) Vertreter: Bittner, Thomas L.

(57) **Zusammenfassung**

Bei einer Mittelführerhauslokomotive (1), die ein Mittelführerhaus (3) für einen Lokführer, wenigstens ein oberflur angeordnetes Versorgungsmodul (111, 121) zum Bereitstellen elektrischer Versorgungsenergie zum Betreiben der Mittelführerhauslokomotive (1), und einen oberflur angeordneten Umrichter (130) zum Überführen der Versorgungsenergie in eine Antriebsenergie für wenigstens einen Fahrantrieb (160) der Mittelführerhauslokomotive (1) umfasst, ist vorgesehen, dass der Umrichter (130) in Längsrichtung (L) zwischen dem wenigstens einen Versorgungsmodul (111, 121) und dem Führerhaus (3) angeordnet ist. (Fig. 7)

## Beschreibung

Die Erfindung betrifft eine Mittelführerhauslokomotive mit einem Mittelführerhaus für einen Lokführer.

### Hintergrund

Mittelführerhauslokomotiven benötigen zur Übertragung von Oberleitungsstrom und von hohen elektrischen Versorgungs- und/oder Antriebsleistungen Stromkabel mit großem Durchmesser, die zuverlässig isoliert sein müssen. Bei der Verlegung der Stromkabel dürfen Mindestbiegeradien nicht unterschritten werden. Die Kabelführung gestaltet sich daher im Allgemeinen schwierig und bedingt einen hohen Bauraumbedarf der Kabelführung.

DE 10 2010 035 903 A1 betrifft eine als Mittelführerhauslokomotive realisierte Rangierlokomotive, bei der in Längsrichtung am Führerhaus angrenzende Bauräume zur Aufnahme von Betriebsmodulen vorgesehen sind. Gemäß DE 10 2010 035 903 A1 soll in einem ersten Endbereich des Fahrzeugrahmens ein Traktionsmodul angeordnet sein, das zur Bereitstellung elektrischer Energie für Radsätze antreibende Antriebsmotoren ausgebildet ist. Gegenüber soll in einem zweiten Endbereich des Fahrzeugrahmens ein Bremsmodul angeordnet sein. Besonders schwere Generator- und/oder Batteriemodule sollen angrenzend zum Führerhaus in einem Bereich nahe der Längs-Mittelachse der Lokomotive angeordnet werden, um eine zentrierte Gewichtsverteilung und damit einhergehende Laufeigenschaften zu erreichen. Die Kabelführung gestaltet sich infolge der wahlweisen Verwendung von Batterie- und Generatormodulen besonders kompliziert.

### Zusammenfassung

Es ist eine Aufgabe der Erfindung, die Nachteile des Stands der Technik zu überwinden, insbesondere eine Mittelführerhauslokomotive mit verbesserter Anbindung verschiedener Baugruppen vorzugsweise durch Stromkabel zu realisieren.

Diese Aufgabe wird gelöst durch die Gegenstände der unabhängigen Ansprüche.

Gemäß einem ersten Aspekt der Erfindung ist eine Mittelführerhauslokomotive vorgesehen, die ein Mittelführerhaus für einen Lokführer, wenigstens ein oberflur angeordnetes Versorgungsmodul zum Bereitstellen elektrischer Versorgungsenergie zum Betreiben der Mittelführerhauslokomotive, und einen oberflur angeordneten Umrichter zum Überführen der Versorgungsenergie in eine Antriebsenergie für wenigstens einen Fahrantrieb der Mittelführerhauslokomotive umfasst. Der Umrichter ist in Längsrichtung zwischen dem wenigstens einen Versorgungsmodul und dem Führerhaus angeordnet. Durch das Anordnen des Umrichters möglichst nah am Führerhaus kann der für die Verkabelung der Mittelführerhauslokomotive erforderliche Bauraum in erheblichem Maße reduziert werden. Im Hinblick auf moderne Mittelführerhauslok-Architekturen bietet die Anordnung des Umrichters am Mittelführerhaus außerdem den Vorteil, dass eine besonders große zusammenhängende Aufnahmefläche für die Versorgungsmodule vorgesehen werden kann.

Vorzugsweise kann vorgesehen sein, dass bei der Mittelführerhauslokomotive unterschiedliche, insbesondere austauschbare, Versorgungsmodule, sowie gegebenenfalls Oberleitungsstromabnehmer, über denselben Umrichter an den gleichen elektrischen Antriebsstrang zum Versorgen des Fahrantriebs mit Antriebsenergie anschließbar sind. Diese Fahrzeugarchitektur ermöglicht eine flexible Umsetzbarkeit unterschiedlicher Energieversorgungslösungen. Angesichts der Fortschritte elektrischer Energiespeichersystemen und der erheblichen und voraussichtlich weiter wachsenden Kostenersparnisse elektrischer Energieversorgung in Relation zu fossilen Energieträgern, gestattet diese Fahrzeugarchitektur in vorteilhafter Weise eine mögliche künftige Umrüstung der Lokomotive durch einfachen Wechsel des Versorgungsmoduls, beispielsweise von einem dieselbetriebenen Generatormodul zu einem Batteriemodul.

Der Umrichter ist insbesondere dazu ausgelegt, die in dem Batteriemodul gespeicherte und/oder die durch das Generatormodul bereitgestellte elektrische Energie (Versorgungsenergie) in kontrollierter Weise an die Antriebsmotoren des Schienenfahrzeugs abzugeben. Als Umrichter oder Stromrichter kann insbesondere eine Einrichtung bezeichnet sein, die elektrische Ströme, beispielsweise Gleichströme, Wechselströme und/oder Drehströme, modifiziert. Bei dem Modifizieren kann eine Änderung des Spannungsniveaus, der Frequenz und/oder Art (Wechselstrom oder Gleichstrom) des Stroms erfolgen. Ein Umrichter oder Stromrichter kann zusätzlich oder alternativ zu einem Transformator zwischen die Oberleitung und die Stromleitung zu zumindest einem Fahrmotor geschaltet sein. Der Umrichter kann beispielsweise einen Gleichrichter am Eingang eines Zwischenkreises und einen Wechselrichter am Ausgang des Zwischenkreises aufweisen (für den Betrieb an einem Wechselspannungsnetz) und/oder eine Drosselspulen-Anordnung zur Glättung von Gleichspannungsschwankungen und den Wechselrichter am Ausgang des Zwischenkreises auf (für den Betrieb an einem Gleichspannungsnetz).

Eine bevorzugte Ausführung einer Mittelführerhauslokomotive umfasst ein Rahmengestell, das auch als Fahrzeugrahmen bezeichnet sein kann, mit wenigstens einer Versorgungsschnittstelle zum, insbesondere lösbaren, Anbinden des wenigstens einen Versorgungsmoduls. Insbesondere ist die Versorgungsschnittstelle normiert zum modularen An- und Umbauen unterschiedlicher Versorgungsmodule ausgestaltet. Die Versorgungsschnittstelle ist insbesondere dazu ausgelegt und eingerichtet, mit einem Versorgungsmodul bestückt zu werden, das ausgewählt sein kann aus der Gruppe umfassend ein Generatormodul, eine Batteriemodul oder ein Wasserstoffspeichermodul. Vorzugsweise umfasst die Versorgungsschnittstelle wenigstens einen elektrischen Versorgungsanschluss zum Transferieren von Versorgungsenergie vom Versorgungsmodul an die Mittelführerhauslokomotive. Optional umfasst die Versorgungsschnittstelle einen Kraftstoffanschluss zum Bereitstellen von Kraftstoff aus einem Kraftstofftank der Mittelführerhauslokomotive an das Versorgungsmodul, insbesondere ein Generatormodul, und/oder einen Abgasanschluss zum Übertragen von Abgasen des Versorgungsmoduls, insbesondere des Generatormoduls, an eine Abgasleitung, wie einen Abgasschacht. Insbesondere umfasst die Versorgungsschnittstelle wenigstens ein mechanisches Befestigungsmittel zum ortsfesten Halten des Versorgungsmoduls am Fahrzeugrahmen.

Bei einer bevorzugten Ausführung umfasst das wenigstens eine Versorgungsmodul der Mittelführerhauslokomotive ein Generatormodul. Das Versorgungsmodul kann aus einem Generatormodul bestehen. Insbesondere umfasst das Generatormodul wenigstens einen Verbrennungsmotor, insbesondere einen Dieselmotor oder einen gasbetriebenen Motor. Alternativ oder zusätzlich umfasst das wenigstens eine Versorgungsmodul der Mittelführerhauslokomotive ein Traktionsbatteriemodul (kurz: Batteriemodul). Das Versorgungsmodul kann aus einem Traktionsbatteriemodul bestehen. Vorzugsweise umfasst das Traktionsbatteriemodul Lithiumlonen-Akkulumatoren. Das Traktionsbatteriemodul kann Batterien ausgewählt aus der Liste umfassend LCO (Lithium-Cobalt-Oxid), LNO (Lithium-Nickel-Oxid), NCA (Lithium-Nickel-Cobalt-Aluminium-Oxid), NMC (Lithium-Nickel-Mangan-Cobalt-Oxid Kobaltoxid), LMO (Lithium Mangan-Oxid), LFP (Lithium Eisenphosphat) und/oder LTO (Lithium Titanat) umfassen oder daraus bestehen. Das Traktionsbatteriemodul umfasst bevorzugt LTO-Batterien. Das wenigstens eine Batteriemodul kann vorzugsweise eine Energiekapazität von wenigstens 200 kWh (Nennkapazität), insbesondere wenigstens 300 kWh, vorzugsweise wenigstens 350 kWh, besonders bevorzugt wenigstens 400 kWh, aufweisen. Vorzugsweise umfasst die Mittelführerhauslokomotive genau ein oder wenigstens ein Versorgungsmodul. Es kann zweckmäßig sein, dass die Mittelführerhauslokomotive nicht mehr als zehn, insbesondere nicht mehr als fünf, vorzugweise nicht mehr als drei Versorgungsmodule aufweist. Vorzugsweise ist das wenigstes eine Versorgungsmodul, insbesondere sind die Versorgungsmodule alle, oberflur an der Mittelführerhauslokomotive angeordnet.

Gemäß einer besonders bevorzugten Ausführung ist die Mittelführerhauslokomotive mit mehreren Versorgungsmodulen gleicher Art, beispielsweise mehreren Traktionsbatteriemodulen oder mehreren Generatormodulen ausgestattet oder ausstattbar. Alternativ kann es vorgesehen sein, dass die Mittelführerhauslokomotive zwei oder mehr unterschiedliche Versorgungsmodule umfasst. Der Umrichter kann dazu ausgelegt und eingerichtet sein, eine insbesondere variable Leistungsverteilung zwischen gleichartigen oder unterschiedlichen Versorgungsmodulen zu steuern. Dadurch kann beispielsweise eine Leistungsverteilung zwischen Traktionsbatterie und Dieselgenerator durch ein nachträgliches Feinjustieren von Lokomotiv-Parametern optimal eingestellt werden. Wenn die Mittelführerhauslokomotive eine Traktionsbatterie oder mehrere Traktionsbatterien, beispielsweise in einem Versorgungsmodul, umfasst, kann beim Betrieb der Lokomotive Bremsenergie in die Traktionsbatterie zurück gespeist werden (Rekuperation).

Bei einer Ausführung einer Mittelführerhauslokomotive ist wenigstens ein am Führerhaus angeordneter Abgasschornstein vorgesehen. Vorzugsweise umfasst die Mittelführerhauslokomotive ferner einen mit dem Abgasschornstein verbundenen Abgasschacht zum Anbinden an ein Generatormodul, insbesondere mittels einer Abgasschnittstelle der Versorgungsschnittstelle. Der Abgasschacht überbrückt den Umrichter in der Längsrichtung. Der Abgasschacht ist vorzugsweise in der Vertikalrichtung unterhalb des Umrichters und/oder im Bereich des Fahrzeugrahmens angeordnet.

Bei einer Mittelführerhauslokomotive ist gemäß einer Ausführung das Mittelführerhaus (kurz: Führerhaus) in der Längsrichtung relativ zu einem Mittelpunkt der Mittelführerhauslokomotive versetzt angeordnet. Das Führerhaus ist dabei zu der von wenigstens einem Versorgungsmodul und/oder vom Umrichter abgewandten Seite versetzt angeordnet. Dadurch wird für das Versorgungsmodul mehr Raum bereitgestellt. Beispielsweise kann die Mittelführerhauslokomotive eine Gesamtlänge aufweisen, die sich unterteilt in die Führerhauslänge, eine Vorderbaulänge und eine Hinterbaulänge, wobei die Vorderbaulänge größer ist als die Hinterbaulänge. Der Umrichter und/oder das wenigstens eine Versorgungsmodul sind vorzugsweise im Bereich der Vorderbaulänge angeordnet.

Vorzugsweise ist bei einer Ausführung der Mittelführerhauslokomotive auf dem Führerhaus ein Stromabnehmer zum Abgreifen von Oberleitungsenergie von einer Oberleitung befestigt oder, insbesondere an einer Stromabnehmerschnittstelle, vorzugsweise lösbar, befestigbar.

Beispielsweise kann der Stromabnehmer, gegebenenfalls in Kombination mit einem Hauptschalter und/oder einem Transformator, dazu ausgelegt sein, Oberleitungsenergie von einer Oberleitung mit einer Oberleitungs-Netzspannung von 15 kV 16,7 Hz AC und/oder 25 kV 50 Hz AC abzugreifen (Wechselspannungsoberleitung). Alternativ kann der Stromabnehmer, gegebenenfalls in Kombination mit einem Hauptschalter und/oder einem Transformator, dazu ausgelegt sein, Oberleitungsenergie von einer Oberleitung mit einer Oberleitungs-Netzspannung von DC 1,5kV oder DC 3 kV abzugreifen (Gleichspannungsoberleitung). Die Mittelführerhauslokomotive kann auf unterschiedliche Art und Weise modular konfiguriert und einfach modular umgerüstet werden. Beispielsweise kann die Mittelführerhauslokomotive für eine kombinierte Oberleitungs- und/oder Generator-Versorgung ausgelegt und eingerichtet sein, wobei optional auf die Oberleitungsversorgung verzichtet werden kann. Ferner kann die Mittelführerhauslokomotive rein elektrisch für einen ausschließlich elektrischen Strecken- und Rangierdienst eingerichtet sein. So kann die Mittelführerhauslokomotive etwa für eine kombinierte Oberleitungs- und/oder Batterieversorgung, oder für eine reine Batterieversorgung ausgelegt und eingerichtet sein. Mit einer derartigen Mittelführerhauslokomotive lassen sich Energie- und Kraftstoffkosten gegenüber konventionellen Vergleichsfahrzeugen um über 50% senken.

Gemäß einem zweiten Aspekt der Erfindung, der mit dem vorigen, dessen Ausführungen und Weiterbildungen kombinierbar ist, ist eine Mittelführerhauslokomotive vorgesehen, die ein Mittelführerhaus für einen Lokführer aufweist und wenigstens einen auf dem Führerhaus angeordneten Stromabnehmer zum Abgreifen von Oberleitungsenergie von einer Oberleitung. Die Mittelführerhauslokomotive umfasst ferner wenigstens einen unterflur angeordneten Transformator. Insbesondere ist der Transformator ausgelegt und eingerichtet zum Überführen der Oberleitungsenergie in eine Antriebsenergie für wenigstens einen Fahrantrieb der Mittelführerhauslokomotive. Der Transformator ist alternativ oder zusätzlich zum Überführen der Oberleitungsenergie in eine Versorgungsenergie zum Betreiben der Mittelführerhauslokomotive ausgelegt und eingerichtet. Vorzugsweise kann die vom Transformator umgewandelte Versorgungsenergie mittels eines Umrichters als Antriebsenergie für einen Fahrantrieb der Mittelführerhauslokomotive bereitgestellt sein. Durch das Abgreifen von Oberleitungsenergie kann die Mittelführerhauslokomotive besonders energieeffizient mit hoher Traktionsleistung betrieben werden. Ferner hat sich gezeigt, dass die mit dem Transformator zu verbindenden Stromleitungen so besonders einfach und platzsparend untergebracht werden können.

Beispielsweise umfasst ein elektrischer Dachaufbau der Mittelführerhauslokomotive einen Stromabnehmer, insbesondere mit einem Pantografen. Der Stromabnehmer ist dazu ausgelegt, elektrische Leistung zur Versorgung der Mittelführerhauslokomotive aus einer Oberleitung ab zu greifen. Der Stromabnehmer kann zwischen einer aktiven Kontaktstellung und einer passiven Raststellung beweglich sein. Die Raststellung kann beispielsweise eine am Dach des Führerhauses anliegende oder nahe am Dach angeordnete Stellung des Stromabnehmers sein. In der aktiven Kontaktstellung ist der Stromabnehmer entfernt von der Mittelführerhauslokomotive, insbesondere dem Dach des Führerhauses, angeordnet, um in einen Berührkontakt mit einer Oberleitung gebracht oder bringbar zu sein. Der Stromabnehmer umfasst vorzugsweise einen Pantografen oder eine andere Kinematik zum Bewegen des Stromabnehmers zwischen der aktiven und der passiven Stellung sowie vorzugsweise zum Halten des Stromabnehmers in der passiven oder aktiven Stellung. Alternativ oder zusätzlich umfasst der wenigstens eine elektrische Dachaufbau einen Hauptschalter. Der Hauptschalter ist vorzugweise dazu ausgelegt und eingerichtet, eine elektrische Verbindung zwischen einerseits dem Stromabnehmer und andererseits einem Bord-Stromnetz der Mittelführerhauslokomotive zu öffnen und/oder schließen. Der Hauptschalter und/oder der Stromabnehmer sind vorzugsweise zur Übertragung von Hochspannung ausgelegt und eingerichtet. Am Stromabnehmer wie auch am Hauptschalter können starke elektromagnetische Felder und Lichtbögen auftreten, von denen die Bordelektronik, der Fahrer und eventuelle Passagiere der Mittelführerhauslokomotive durch Schutzblenden im Bereich des Daches des Führerhauses geschützt werden können.

Bei einer Weiterbildung einer Mittelführerhauslokomotive mit Unterflur-Transformator ist zumindest ein Längsabschnitte des Transformators in der Vertikalrichtung unterhalb des Führerhauses, also der vom Führerhaus in der Quer- und Längsrichtung aufgespannten Fläche, angeordnet. Wenn der Stromabnehmer auf dem Führerhaus und der Transformator darunter angeordnet sind, kann die Stromleitung, welche Transformator und Stromabnehmer verbindet, besonders kompakt gestaltet werden.

Bei einer bevorzugten Weiterbildung einer Mittelführerhauslokomotive mit Unterflur- Transformator erstreckt sich ein Schacht, wie ein Abgasschacht und/oder Abgasschornstein, in der Längsrichtung im Bereich des Transformators und/oder zwischen dem Führerhaus und einem Umrichter. Der Umrichter ist zum Überführen von Versorgungsenergie, beispielsweise von dem Transformator und/oder einem Versorgungsmodul, in Antriebsenergie zum Betreiben wenigstens eines Fahrantriebs der Mittelführerhauslokomotive ausgelegt und eingerichtet. Dieser Schacht kann beispielsweise als Abgasschornstein mit vertikaler Haupterstreckungsrichtung und einem sich in Längs- und Querrichtung ausbreitenden Öffnungsquerschnitt realisiert sein.

Gemäß einer Weiterbildung einer Mittelführerhauslokomotive mit transformator- und/oder führerhausnahem Schacht ist wenigstens eine, insbesondere den Transformator mit dem Stromabnehmer verbindende, Stromleitung zwischen dem Transformator und dem Dach des Führerhauses in dem Schacht geführt. So lässt sich eine besonders raumsparende Unterbringung der Stromleitung realisieren.

Bei einem dritten Erfindungsaspekt einer Mittelführerhauslokomotive, der mit den vorigen und dessen Ausführungen und Weiterbildungen kombinierbar ist, umfasst die Lokomotive ein Mittelführerhaus für einen Lokführer und wenigstens zwei Fahrgestelle sowie eine zwischen den zwei Fahrgestellen unterflur angeordnete oder anordenbare Traktionsbatterie. Die Unterflur-Traktionsbatterie kann vorzugsweise mit einem Umrichter der Mittelführerhauslokomotive verbunden oder verbindbar sein. Die Unterflur-Traktionsbatterie hat insbesondere eine Kapazität von wenigstens 50 kWh (Nennkapazität), vorzugsweise wenigstens 80 kWh, besonders bevorzugt weniger als 100 kWh oder wenigstens 120 kWh. Durch die unterflur-Anordnung der Traktionsbatterie zwischen den Fahrgestellen ist diese besonders gut vor Beschädigungen infolge von Unfällen geschützt.

Gemäß einer Weiterbildung umfasst die Mittelführerhauslokomotive mit unterflur anordenbarer Traktionsbatterie wenigstens eine unterflur angeordnete Aufnahme für einen Kraftstofftank, die Traktionsbatterien, einen Transformator oder ein anderes Energiemodul. Alternativ oder zusätzlich kann ein Energiemodul einen Hauptschalter umfassen, insbesondere einen Hauptschalter für den Betrieb mittels einer Gleichspannungs-Oberleitung. Die Mittelführerhauslokomotive umfasst ferner wenigstens eine Verbindungsschnittstelle zum, insbesondere lösbaren, Anbinden des Energiemoduls, d. h. des Kraftstofftanks, der Traktionsbatterien und/oder des Transformators. Ein Kraftstofftank kann beispielsweise ein Volumen von 1000 I bis 3000 I, insbesondere 1500 I bis 2300 I für einen flüssigen Kraftstoff bei Umgebungsdruck und Umgebungstemperatur aufweisen. Es kann bevorzugt sein, dass die Mittelführerhauslokomotive mehrere, insbesondere genau zwei, Unterfluraufnahmen für Energiemodule mit Verbindungsschnittstelle aufweist. Die Unterfluraufnahme ist insbesondere dazu ausgelegt und eingerichtet, mit einem Energiemodul bestückt zu werden, das ausgewählt sein kann aus der Gruppe umfassend einen Kraftstofftank, eine Traktionsbatterie oder einen Transformator. Vorzugsweise umfasst die Verbindungsschnittstelle wenigstens einen elektrischen Verbindungsanschluss zum Transferieren von Versorgungsenergie von der Traktionsbatterie an die Mittelführerhauslokomotive. Optional umfasst die Verbindungsschnittstelle einen Kraftstoffanschluss zum Bereitstellen von Kraftstoff aus dem Kraftstofftank an die Mittelführerhauslokomotive, insbesondere ein Generatormodul. Insbesondere umfasst die Unterfluraufnahme wenigstens ein mechanisches Befestigungsmittel zum ortsfesten Halten des Energiemoduls am Fahrzeugrahmen. Mehrere Unterfluraufnahmen sind vorzugsweise mit mehreren Energiemodulen gleicher Art, beispielsweise mehreren Traktionsbatterien oder mehreren Kraftstofftanks, ausgestattet oder ausstattbar. Alternativ kann es vorgesehen sein, dass die Mittelführerhauslokomotive zwei oder mehr unterschiedliche Energiemodule in den Unterfluraufnahmen aufweist, etwa eine erste Kombination umfassend eine Traktionsbatterie und einen Kraftstofftank, eine zweite Kombination umfassend eine Traktionsbatterie und einen Transformator oder eine dritte Kombination umfassend einen Kraftstofftank und einen Transformator.

Gemäß einer Ausführung einer Mittelführerhauslokomotive erstreckt sich unterflur ein Zwischenraum von einem ersten Fahrgestell zu einem zweiten Fahrgestell. Der Zwischenraum ist in der Längsrichtung zur 10 % bis 90 %, vorzugsweise 15% bis 80%, besonders bevorzugt 20% bis 60%, in der Vertikalrichtung unterhalb einer vom Führerstand aufgespannten Fläche angeordnet. Vorzugsweise bilden wenigstens 40%, wenigstens 50%, wenigstens 60%, wenigstens 70% oder wenigstens 80%, des Zwischenraums eine Unterfluraufnahme für ein oder mehrere Energiemodule.

Bei einer Weiterbildung einer Mittelführerhauslokomotive mit einem Zwischenraum und einer Verbindungsschnittstelle zum, insbesondere lösbaren, Anbinden des Kraftstofftanks, der Traktionsbatterie und/oder des Transformators ist Letztere in dem Zwischenraum, insbesondere in Vertikalrichtung unterhalb der vom Führerstand aufgespannten Fläche, angeordnet. In der Längsrichtung erstreckt sich der Zwischenraum vorzugsweise über wenigstens 10 %, insbesondere wenigstens 20 %, vorzugsweise wenigstens 25% oder 30 %, der Lokomotivlänge. Es kann zweckmäßig sein, dass der Zwischenraum sich über nicht mehr als 50 %, insbesondere nicht mehr als 40 %, der Lokomotivlänge erstreckt.

Gemäß einer Weiterbildung einer Mittelführerhauslokomotive mit einem Zwischenraum zwischen einzelnen Fahrgestellen sind wenigstens 40%, wenigstens 50%, wenigstens 60%, wenigstens 70% oder wenigstens 80%, des Zwischenraums mit einer Traktionsbatterie belegt.

Die Mittelführerhauslokomotive ist ein Schienenfahrzeug, insbesondere eine Rangierlokomotive. Mittelführerhauslokomotiven können dazu ausgelegt sein, wahlweise mit oder ohne Oberleitung betrieben zu werden. Insbesondere können Mittelführerhauslokomotiven für einen betriebsgemäßen Einsatz unabhängig oder frei von einer Oberleitung ausgelegt sein, beispielsweise für den Nebenstreckenbetrieb oder für den Bauzugverkehr. Es kann vorgesehen sein, dass Gehäuse, etwa für einen Umrichter und/oder Versorgungsmodule, vor und/oder hinter dem Führerhaus eine maximale Gehäusehöhe haben, die vorzugsweise auf eine untere Fensterhöhe insbesondere der Unterkante der Fenster des Führerhauses begrenzt ist, um dem Fahrer eine freie Rundumsicht für den Fahrer zu erlauben, und so eine gute Übersicht und Sicherheit im Betrieb zu gewährleisten.

Eine Mittelführerhauslokomotive umfasst im Allgemeinen einen Fahrzeugrahmen und einen in Längsrichtung in etwa mittig auf dem Fahrzeugrahmen angeordneten Führerhaus. Der Fahrzeugrahmen kann als Rahmengestell bezeichnet sein. Die Länge des Fahrzeugrahmens kann vorzugsweise größer als 10 Meter, vorzugsweise größer als etwa 12 Meter sein. Vorzugsweise korrespondiert die Längsrichtung zur betriebsgemäßen (geradeaus-) Fahrtrichtung der Mittelführerhauslokomotive. Die Begriffe "oberflur" und "unterflur" können insbesondere in Bezug auf das einen Flur bildende Rahmengestell bezogen sein. Oberflur angeordnete Komponenten der Mittelführerhauslokomotive, wie das Mittelführerhaus, erstrecken sich in der Vertikalrichtung oberhalb des Rahmgestells. Unterflur angeordnete Komponenten der Mittelführerhauslokomotive, wie die Fahrgestelle, erstrecken sich in der Vertikalrichtung unterhalb des Rahmgestells.

Mit Längsrichtung kann im Allgemeinen die Haupterstreckungsrichtung der Mittelführerhauslokomotive bezeichnet werden. Mit Längsrichtung kann im Allgemeinen die bei betriebsgemäßem Gebrauch der Mittelführerhauslokomotive auf einer Schienenstrecke parallel zur Schienenstrecke orientierte Richtung bezeichnet sein. Begriffe wie "vorne", "hinten", etc. sind im Rahmen der vorliegenden Offenbarung im Allgemeine in Relation zu dieser Längsrichtung zu verstehen.

Mit Querrichtung kann im Allgemeinen die bei betriebsgemäßem Gebrauch der Mittelführerhauslokomotive auf einer Schienenstrecke quer zur Schienenstrecke orientierte Richtung bezeichnet sein. Begriffe wie "rechts", "links", etc. sind im Rahmen der vorliegenden Offenbarung im Allgemeine in Relation zu dieser Querrichtung in Bezug auf eine designierte Vorderseite bzw. Vorwärtsrichtung der Lokomotive zu verstehen.

Die Vertikalrichtung bezeichnet im Allgemeinen die bei betriebsgemäßem Gebrauch der Mittelführerhauslokomotive auf einer im Wesentlichen flachen Schienenstrecke, insbesondere auf ebener Schienenfläche im Sinne der Schwerkraft, senkrecht auf der Schienenstrecke orientierte Richtung. Begriffe wie "oben", "unten", etc. sind im Rahmen der vorliegenden Offenbarung im Allgemeine in Relation zu dieser Vertikalrichtung zu verstehen.

Anders als eine Mittelführerhauslokomotive sind Stirnführerhauslokomotiven, wie in EP 1 926 648 B1 beschrieben, mit zwei an der in Längsrichtung vorderen und hinteren Stirnseite angeordneten Führerräumen ausgestattet, zwischen denen ein Maschinenraum angeordnet ist, der unterschiedliche Aggregate, wie dieselelektrische Generatoren, Transformatoren für Oberleitungsstrom, Schaltschränke und dergleichen aufnimmt und sich eben so hoch wie oder höher als das Dach der Führerräume erstreckt.

Bevorzugte Ausführungen der Erfindung werden in den abhängigen Ansprüchen beschrieben. Weitere Eigenschaften, Vorteile und Merkmale der Erfindung werden durch die folgende Beschreibung von bevorzugten Ausführungen der Erfindung anhand der beiliegenden Zeichnungen deutlich, in denen zeigen:

### Beschreibung von Ausführungsbeispielen

- Fig. 1: eine Seitenansicht einer ersten Ausführung einer Mittelführerhaus-Iokomotive mit einem Oberleitungsstromabnehmer;
- Fig. 2: eine Draufsicht auf die Mittelführerhauslokomotive gemäß Fig. 1;
- Fig. 3: eine Seitenansicht einer zweiten Ausführung einer Mittelführerhaus-lokomotive ohne Oberleitungsstromabnehmer;
- Fig. 4a: eine schematische Darstellung einer Mittelführerhauslokomotive mit EDD Konfiguration;
- Fig. 4b: eine schematische Darstellung der Versorgungs- und Antriebselektronik der EDD-Lokomotive gemäß Figur 4a;
- Fig. 5a: eine schematische Darstellung einer Mittelführerhauslokomotive mit BDD Konfiguration;
- Fig. 5b: eine schematische Darstellung der Versorgungs- und Antriebselektronik der BDD-Lokomotive gemäß Figur 5a;
- Fig. 6a: eine schematische Darstellung einer Mittelführerhauslokomotive mit EBB Konfiguration;
- Fig. 6b: eine schematische Darstellung der Versorgungs- und Antriebselektronik der EBB-Lokomotive gemäß Figur 6a; und
- Fig. 7: eine Prinzipskizze zur Veranschaulichung der modularen Umrüstbarkeit der erfindungsgemäßen Mittelführerhauslokomotive.

In der nachfolgenden Beschreibung bevorzugter Ausführungen anhand der Figuren werden zur Vereinfachung der Lesbarkeit dieselben oder ähnliche Komponenten mit denselben oder ähnlichen Bezugszeichen versehen.

Eine erfindungsgemäße Mittelführerhauslokomotive ist im Allgemeinen mit dem Bezugszeichen 1 versehen. Im Folgenden wird zur Vereinfachung der Lesbarkeit anstelle des Begriffs "Mittelführerhauslokomotive" die Kurzform "Lokomotive" verwendet, wobei klar sei, dass stets eine Mittelführerhauslokomotive gemeint ist. Eine Lokomotive 1 hat ein Führerhaus 3 für den Lokomotivführer (kurz: Fahrer), welches in Längsrichtung L mittig angeordnet ist (Mittelführerhaus). Zwischen dem Führerhaus 3 und dem vorderen Ende der Lokomotive 1 wie auch zwischen dem Führerhaus 3 und dem hinteren Ende der Lokomotive 1 erstreckt sich ein Abstand von der je wenigstens 1 m oder mehr.

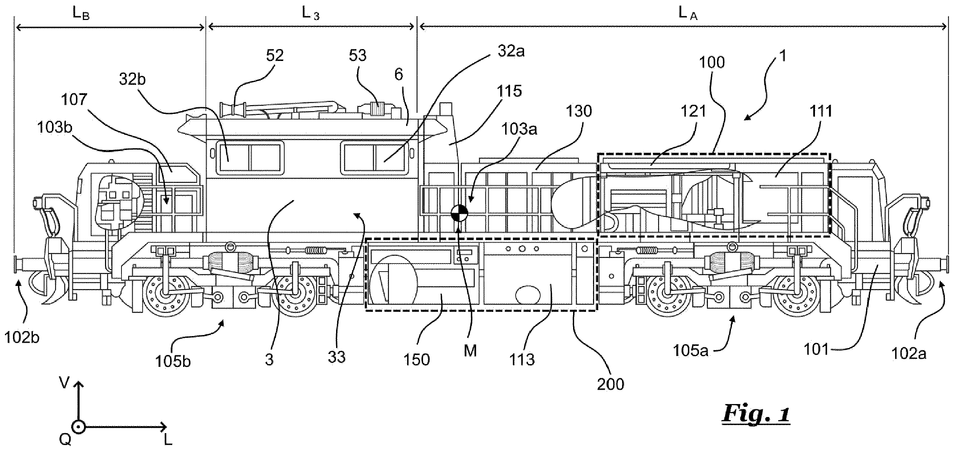

Bei der in Figur 1 abgebildeten exemplarischen Ausführung ist Lokomotivlänge L1 wesentlich größer als die Führerhauslänge L₃, beispielsweise mehr als 5 m oder mehr als 10 m länger. Die Lokomotivlänge der Mittelführerhauslokomotive 1 kann 12 m bis 24 m betragen, insbesondere zwischen 15 m und 20 m, vorzugsweise zwischen 18 m und 19 m. Die Führerhauslänge L₃ kann zwischen 3,5 m und 6 m, insbesondere zwischen 3,7 m und 4 m betragen. Zwischen dem in der Längsrichtung L ersten Ende, das hier als vorderes Ende 102a bezeichnet wird, und dem Führerhaus 3 erstreckt sich eine Vorderbau-Länge L_{A} von etwa 9-13 m, insbesondere etwa 10-12 m. Zwischen dem in der Längsrichtung L zweiten Ende, das hier als hinteres Ende 102b bezeichnet wird, und dem Führerhaus 3 erstreckt sich eine Hinterbau-Länge L_{B} von etwa 1 m bis 5 m, insbesondere etwa 1,5 m bis 3 m.

Die Lokomotive 1 umfasst ein massives Fahrzeuggestell oder Rahmengestell 101, auf dem das Führerhaus 3 angeordnet ist. An dem Rahmengestell 101 sind vorne und hinten Stoßdämpfer 102a, 102b angeordnet. Vorne und hinten weist die Lokomotive 1 je ein um eine vertikale Achse drehbares Fahrgestell 105a, 105b auf. Auf dem Rahmengestell 101 sind mehrere Aufbauten vor und hinter dem Führerhaus 3 angeordnet. Auf dem Rahmengestell 101 ist ein Generatormodul 111 und ein Traktionsbatteriemodul 121 angeordnet, welche Antriebsenergie für in den Fahrgestellen 105a, 105b angeordnet Antriebsmotoren bereitstellen können. Elektrische Antriebsenergie kann vom Generatormodul 111 und/oder dem Traktionsbatteriemodul 121 über einen Umrichter 130 an die Antriebsmotoren bereitgestellt werden.

Das Generatormodul 111 kann als Versorgungsaggregat beispielsweise einen Dieselmotor oder einen mit Gas betriebenen Motor umfassen. In Vertikalrichtung V unterhalb des Rahmengestells 101 ist ein Kraftstofftank 113, beispielsweise für Dieselkraftstoff, vorgesehen, um das Versorgungsaggregat zu betreiben. Von dem Generatormodul 111 verläuft eine Abgasleitung bis zu dem Abgasschornstein 115, der sich in Vertikalrichtung V bis oberhalb des Führerhauses 3 erstreckt. Durch diese Anordnung des Abgasschornsteins können Abgase oberhalb des Führerhauses 3 abgegeben werden, damit kein Rauch ins Führerhaus geleitet wird. Die (nicht näher dargestellte) Abgasleitung überbrückt den zwischen Führerhaus 3 und Generatormodul 111 angeordneten Umrichter 130. Es ist denkbar, dass die Lokomotive 1 zwei Generatormodule 111 oder zwei Traktionsbatteriemodule 121 aufweist (nicht abgebildet). Anstelle eines Traktionsbatteriemoduls 121 könnte alternativ beispielsweise ein Wasserstoffspeicher vorgesehen sein. Die Versorgungsmodule 111, 121 sind in einer Oberfluraufnahme oder Aufnahmefläche 100 untergebracht. Zwischen den angetriebenen Drehgestellen oder Fahrgestellen 105a, 105b ist eine Unterfluraufnahme 200 für Energiemodule 113, 123, 150 angeordnet.

Auf dem Dach 43 des Führerhauses 3 sind elektrische Dachaufbauten 5 angeordnet. Zur Versorgung der Lokomotive 1 kann es zweckmäßig sein, einen Stromabnehmer 52 zum Abgreifen elektrischer Energie von der Oberleitung vorzusehen. Der Stromabnehmer 52 kann mittels eines Pantografen oder dergleichen in der Vertikalrichtung V beweglich sein. Eine Lokomotive 1 mit Oberleitungs-Stromabnehmer 52 umfasst ferner einen Transformator 150 zum Bereitstellen von elektrischer Antriebsenergie für die Antriebsmotoren. Der Transformator 150 kann unterhalb des Führerhauses 3 angeordnet sein. Bei der in Figur 1 dargestellten Ausführung einer Mittelführerhauslokomotive 1 ist der Transformator 150 in Längsrichtung L mittig unten an dem Rahmengestell 101 befestigt. Der Transformator 150 befindet sich in der Längsrichtung L zwischen den Fahrgestellen 105a, 105b. Es kann zweckmäßig sein, die elektrische Leitung von dem Stromabnehmer 52 zum Transformator 150 im oder angrenzend an den Abgasschornstein 115 zu führen. Zum wahlweisen Trennen oder Verbinden des Stromabnehmers 52 von der Oberleitung ist ein Hauptschalter 53 vorgesehen. Der Stromabnehmer 52 und der Hauptschalter 53 sind optional als Dachaufbauten 5 auf dem Führerhaus 3 angeordnet. Alternativ kann ein Hauptschalter, insbesondere für einen Betrieb mit einer Gleichspannungs-Oberleitung, unterflur angeordnet sein. Ein Hauptschalter kann beispielsweise unterflur in dem Zwischenraum zwischen den Fahrgestellen 105a, 105b angeordnet sein. Ein Energiemodul kann den Hauptaschalter umfassen.

Das Führerhaus 3 ist bei der hier abgebildeten Lokomotive 1 asymmetrisch vom Mittelpunkt M des Rahmengestells 101 in der Längsrichtung L nach hinten versetzt angeordnet. Das Führerhaus 3 erstreckt sich oberhalb eines Teils des hinteren Fahrgestells 105b und eines Teils des Transformators 150.

Das Führerhaus 3 hat an seiner Vorderseite und seiner Rückseite je eine Einstiegstür, die auf einen Gang 103a, 103b auf dem Rahmengestell 101 führt, welcher sich in der Längsrichtung ausdehnt. Der vordere Gang 103a führt in Querrichtung Q seitlich neben der Versorgungsaufnahme 100 entlang. Der hintere Gang 103b führt in Querrichtung Q seitlich neben einem Aufbau, der beispielsweise eine Klimaanlage 107 zum Temperieren des Führerhauses 3 umfassen kann, vorbei. Das Führerhaus 3 hat in der Längsrichtung L in Fahrtrichtung vorwärts wie auch Fahrtrichtung rückwärts ausgerichtete Windschutzscheiben. Das Führerhaus 3 hat mehrere in seiner Seitenwand 33 ausgebildete Seitenfenster 32a, 32b. Die Aufbauten auf dem Rahmengestell 101 erstrecken sich in der Vertikalrichtung in etwa auf Höhe der Fensterunterkante der Seitenfenster 32a, 32b und/oder der Windschutzscheibe, um dem Fahrer eine möglichst ungehinderte Sicht auf die Umgebung zu ermöglichen.

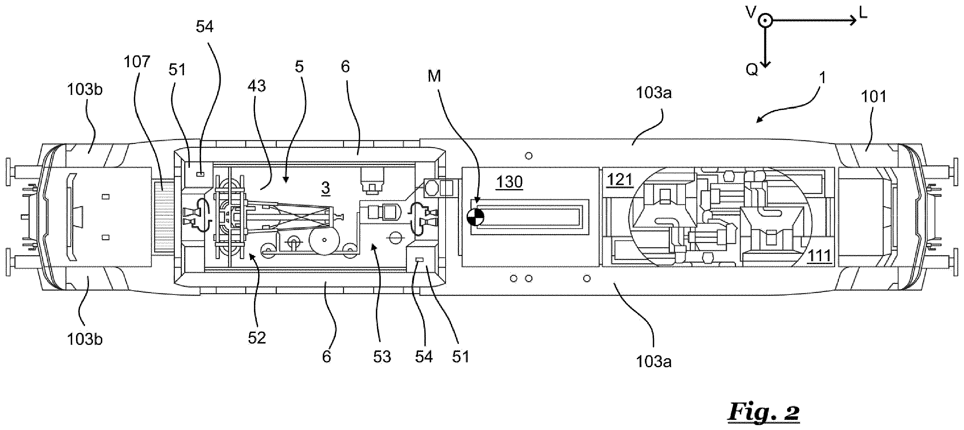

Wie in Figur 2 zu sehen, sind können die auf dem Führerhaus 3 angeordneten elektrischen Dachaufbauten 5 Antennen 54 umfassen. Die Antennen 54 können auf Antennenträgern 51 angeordnet sein. Als Antenne 54 kann zum Beispiel eine GSMR-Antenne, eine Antenne zur Funkfernsteuerung, eine Antenne zur Diagnose, eine Zugfunkantenne, eine Zugsicherungsantenne und/oder eine Stromverbrauchsmessantenne vorgesehen sein. Um den Fahrer und andere Personen im Führerhaus 3 vor durch die Dachaufbauten 5 erzeugten elektromagnetischen Feldern, Wellen und/oder Strahlen zu schützen, sind Schutzblenden 6 an der Oberseite des Führerhauses 3 angeordnet. Die Dachaufbauten 5 befinden sich in der Querrichtung Q zwischen diesen Schutzblenden 6. Die Schutzblenden 6 können sich an der Oberseite in der Längsrichtung L im Wesentlichen vollständig entlang der Längsrandkanten 39 des Führerhauses 3 ausdehnen.

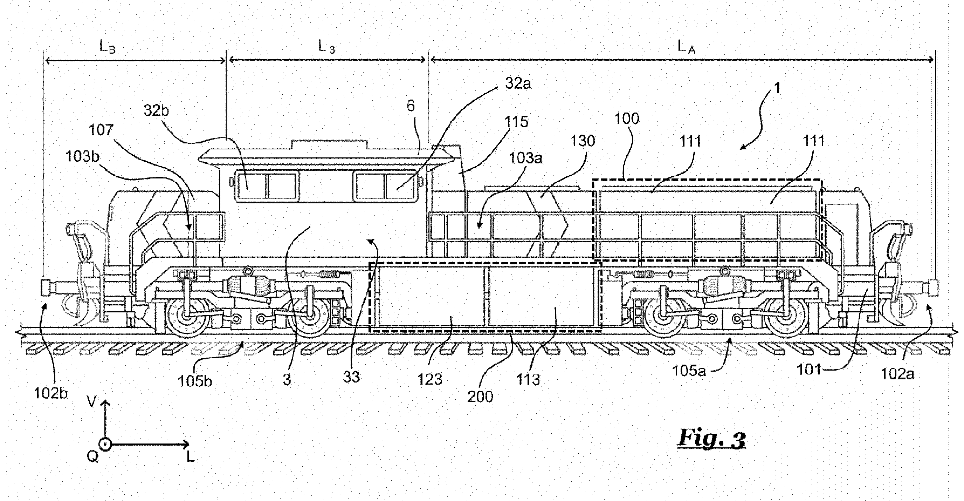

Fig. 3 zeigt eine Mittelführerhauslokomotive 1 mit einer sogenannten "BDD" Konfiguration. Die Lokomotive 1 ist mit zwei Generatormodulen 111 in ihrer Oberfluraufnahme 100 bestückt. Die Unterfluraufnahme 200 ist mit einem Kraftstofftank 113 und einer Traktionsbatterie 123 belegt. Die in Figur 3 abgebildete Mittelführerhauslokomotive 1 ist ohne Stromabnehmer 52 ausgeführt.

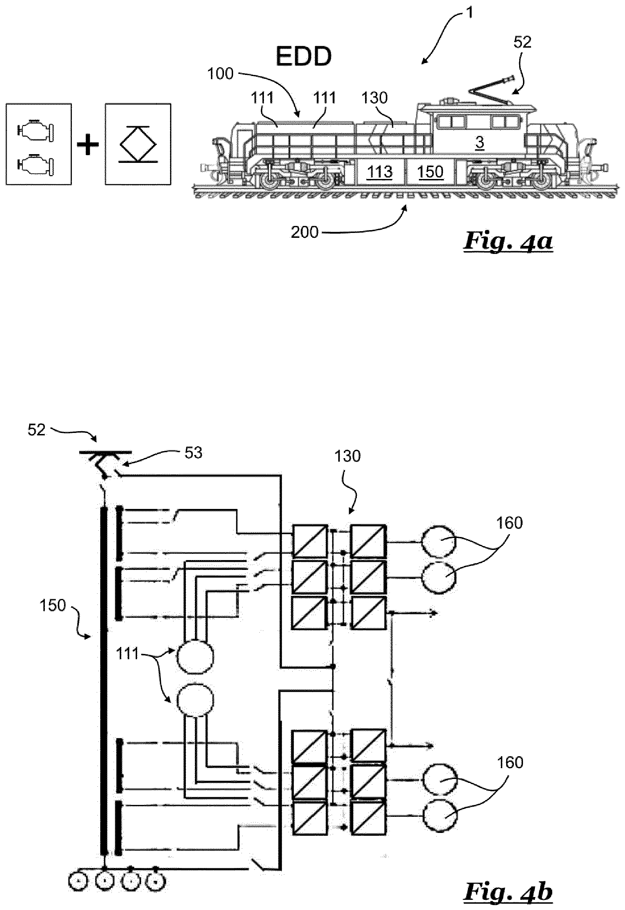

In den Figuren 4a und 4b wird schematisch eine Mittelführerhauslokomotive mit EDD Konfiguration dargestellt. Auf dem Dach 43 des Führerhauses ist ein Stromabnehmer 52 für Oberleitungsstrom vorgesehen. Die Oberfluraufnahme 100 ist hier mit Generatormodulen 111 bestückt. Die Unterfluraufnahme 200 enthält als Energiemodule einen Kraftstofftank 113 und den Transformator 150, der mit dem Stromabnehmer 52 verbunden ist. Die Abkürzung EDD kann exemplarisch für Elektro-Diesel-Diesel stehen. Der Umrichter 130 ist sowohl mit dem Transformator 150 als auch mit den Generatormodulen 111 elektrisch verbunden, um elektrische Versorgungsenergie zu empfangen und diese in Antriebsenergie gemäß den Spezifikationen der Fahrantriebe 160 in den Fahrgestellen 105a, 105b um zu richten.

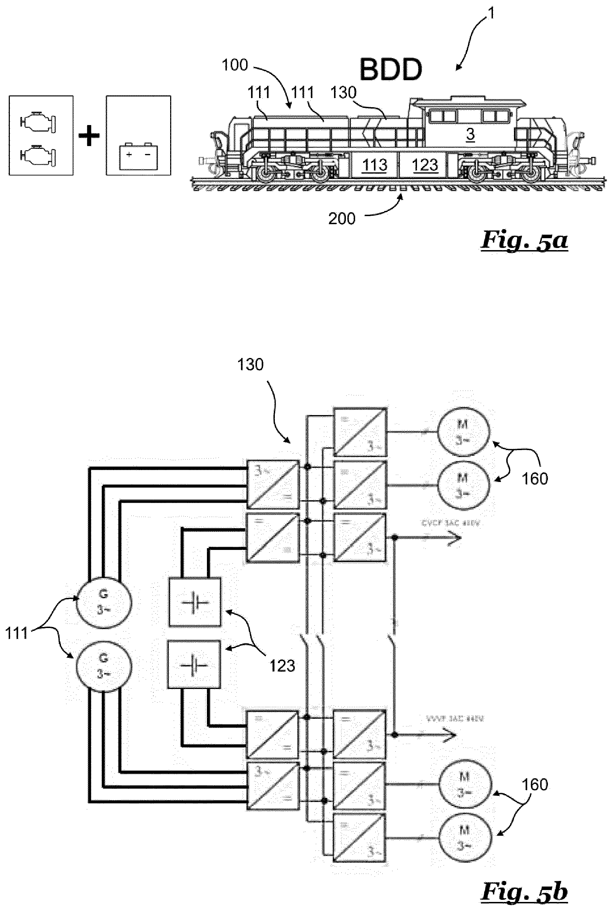

In den Figuren 5a und 5b wird schematisch eine Mittelführerhauslokomotive mit BDD Konfiguration dargestellt. Die Lokomotive 1 hat keinen Stromabnehmer zum Abgreifen von Oberleitungsstrom. Stattdessen wird die Lokomotive 1 gemäß den Figuren 5a und 5b durch die mitgeführten Versorgungsmodule mit Energie versorgt. Die Versorgungsmodule sind hier durch Generatormodule 111 realisiert, mit denen die Oberfluraufnahme 100 bestückt ist. Die Lokomotive 1 erhält außerdem Versorgungsenergie aus der Traktionsbatterien 123 in der Unterfluraufnahme 200. Die Unterfluraufnahme 200 beherbergt neben den Traktionsbatterien 123 einen Kraftstofftank 113 beispielsweise für Dieselkraftstoff. Die Abkürzung BDD kann exemplarisch für Batterie-Diesel-Diesel stehen. Der Umrichter 130 ist sowohl mit der Traktionsbatterie 123 als auch mit den Generatormodulen 111 elektrisch verbunden, um elektrische Versorgungsenergie zu empfangen und diese in Antriebsenergie gemäß den Spezifikationen der Fahrantriebe 160 um zu richten. Es ist denkbar, dass anstelle der Traktionsbatterie 123 ein zusätzliches Energiemodul in Form eines weiteren Kraftstofftanks oder ein einzelner, großer Kraftstofftank in der Unterfluraufnahme 200 vorgesehen ist. In einem solchen Fall kann von einer reinen Diesellokomotive (DD) die Rede sein.

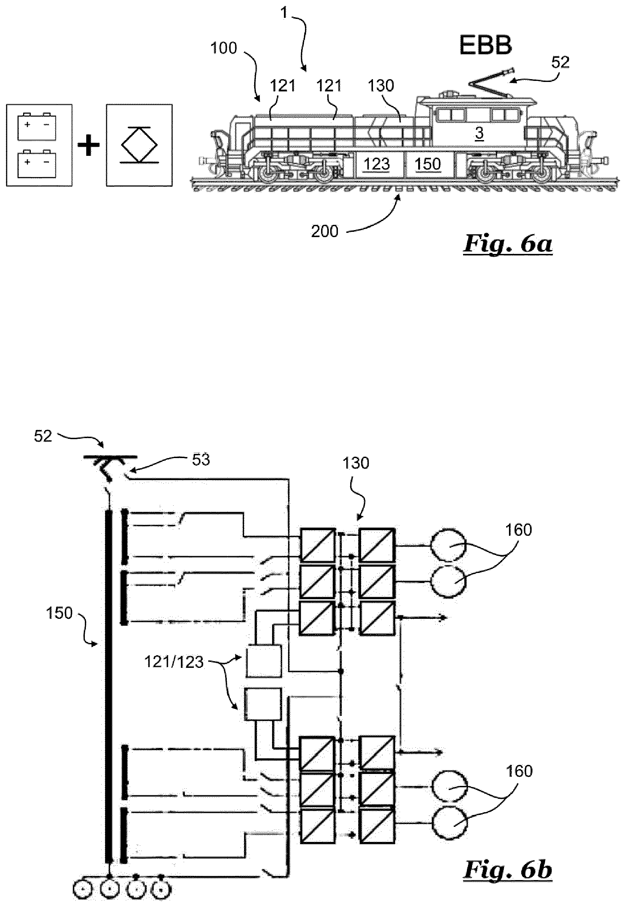

In den Figuren 6a und 6b wird schematisch eine Mittelführerhauslokomotive mit EBB Konfiguration dargestellt. Auf dem Dach 43 des Führerhauses ist ein Stromabnehmer 52 für Oberleitungsstrom vorgesehen. Die Unterfluraufnahme 200 enthält als Energiemodule eine Traktionsbatterie 123 und den Transformator 150, der mit dem Stromabnehmer 52 verbunden ist. In der Oberfluraufnahme 100 sind weitere Traktionsbatterien in den Batteriemodulen 121 untergebracht. Die Abkürzung EBB kann für Elektro-Batterie-Batterie stehen. Der Umrichter 130 stellt für die Fahrantriebe 160 eine Antriebsenergie bereit und empfängt Versorgungsenergie vom Transformator 150, den Batteriemodulen 121 und der unterflur angeordneten Traktionsbatterie 123. Der Hauptschalter kann hierbei unterflur angeordnet sein, beispielsweise als ein Energiemodul (nicht näher dargestellt). Die EBB Konfiguration kann speziell für den Betrieb an einer Gleichspannungs-Oberleitung ausgelegt sein.

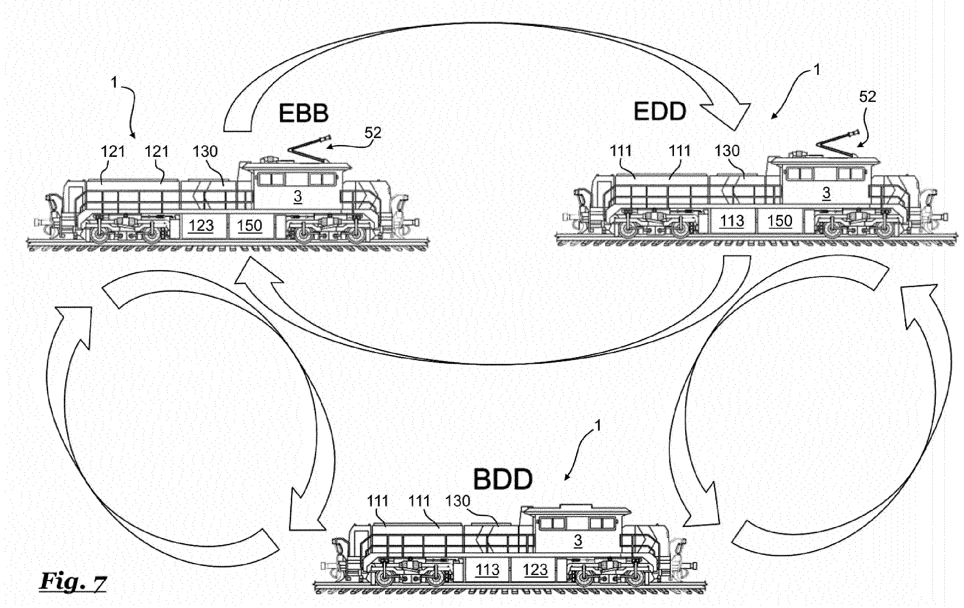

Figur 7 veranschaulicht die durch die oben beschriebene modulartig realisierte Umrüstbarkeit der erfindungsgemäßen Mittelführerhauslokomotive 1. Mithilfe der Versorgungschnittstelle an der Oberfluraufnahme 100 und der Verbindungsschnittstelle der Unterfluraufnahme 200 sowie dadurch, dass der Stromabnehmer 52 sowie gegebenenfalls weitere elektrischen Dachaufbauten 5 mittels einer Dachschnittstelle oder ähnlichem lösbar gestaltet ist, kann die Mittelführerhauslokomotive 1 auf einfache Weise anforderungsgerecht eingerichtet werden. Die in Längsrichtung L zentrale Anordnung des Umrichters 130 und/oder des Transformators 150 bewirkt dabei in vorteilhafter Weise, dass nur wenige und kompakte Stromleitungen notwendig sind. Durch die Vermeidung unnötiger Stromleitungen kann zum einen der Materialverbrauch verringert werden und außerdem Bauraum sowie Gewicht gespart werden.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichen:

- 1: Mittelführerhauslokomotive
- 3: Führerhaus
- 5: elektrische Dachaufbauten
- 6: Schutzblende
- 7: elektrischer Schaltschrank
- 8: Versenkung
- 9: Montagestruktur
- 32a, 32b: Seitenfenster
- 33: Seitenwand
- 43: Dach
- 51: Antennenträger
- 52: Stromabnehmer
- 53: Hauptschalter
- 54: Antenne
- 100: Aufnahmefläche, Oberfluraufnahme
- 101: Rahmengestell
- 102a, 102b: Stoßdämpfer
- 103a: Gang (vorne)
- 103b: Gang (hinten)
- 105a, 105b: Fahrgestell / Drehgestell
- 107: Klimaanlage
- 111: Generatormodul
- 113: Kraftstofftank
- 115: Abgasschornstein
- 121: Traktionsbatteriemodul
- 123: Traktionsbatterie
- 130: Umrichter
- 150: Transformator
- 160: Fahrantrieb
- 200: Unterfluraufnahme

- L: Längsrichtung
- L₃: Führerhauslänge
- L_{A}: Vorderbaulänge
- L_{B}: Hinterbaulänge
- M: Mittelpunkt
- Q: Querrichtung
- V: Vertikalrichtung

## Patentansprüche

1. Mittelführerhauslokomotive (1), umfassend: ein Mittelführerhaus (3) für einen Lokführer, wenigstens ein oberflur angeordnetes Versorgungsmodul (111, 121) zum Bereitstellen elektrischer Versorgungsenergie zum Betreiben der Mittelführerhauslokomotive (1), und einen oberflur angeordneten Umrichter (130) zum Überführen der Versorgungsenergie in eine Antriebsenergie für wenigstens einen Fahrantrieb (160) der Mittelführerhauslokomotive (1), wobei der Umrichter (130) in Längsrichtung (L) zwischen dem wenigstens einen Versorgungsmodul (111, 121) und dem Mittelführerhaus (3) angeordnet ist.

2. Mittelführerhauslokomotive (1) nach Anspruch 1, ferner umfassend ein Rahmengestell (101) mit wenigstens einer Versorgungsschnittstelle zum, insbesondere lösbaren, Anbinden des wenigstens einen Versorgungsmoduls (111, 121).

3. Mittelführerhauslokomotive (1) nach Anspruch 1 oder 2, wobei das wenigstens eine Versorgungsmodul (111, 121) ein Generatormodul (111), insbesondere umfassend einen Dieselmotor, und/oder ein Traktionsbatteriemodul (121), insbesondere umfassend LTO Batterien, umfasst oder daraus besteht.

4. Mittelführerhauslokomotive (1) nach einem der vorstehenden Ansprüche, umfassend wenigstens einen am Mittelführerhaus (3) angeordneten Abgasschornstein (115), vorzugsweise ferner umfassend einen mit dem Abgasschornstein (115) verbundenen Abgasschacht zum Anbinden an ein Generatormodul (111), wobei der Abgasschacht den Umrichter (130) in der Längsrichtung (L) überbrückt.

5. Mittelführerhauslokomotive (1) nach einem der vorstehenden Ansprüche, wobei das Mittelführerhaus (3) in der Längsrichtung (L) relativ zu einem Mittelpunkt (M) der Mittelführerhauslokomotive (1) in vom wenigstens einen Versorgungsmodul (111, 121) und/oder vom Umrichter (130) abgewandte Seite versetzt angeordnet ist.

6. Mittelführerhauslokomotive (1) nach einem der vorstehenden Ansprüche, wobei auf dem Mittelführerhaus (3) ein Stromabnehmer (52) zum Abgreifen von Oberleitungsenergie von einer Oberleitung befestigt oder, insbesondere an einer Stromabnehmerschnittstelle, vorzugsweise lösbar, befestigbar ist.

7. Mittelführerhauslokomotive (1), insbesondere nach einem der vorstehenden Ansprüche, umfassend: ein Mittelführerhaus (3) für einen Lokführer, wenigstens einen auf dem Mittelführerhaus (3) angeordneten Stromabnehmer (52) zum Abgreifen von Oberleitungsenergie von einer Oberleitung, und wenigstens einen unterflur angeordneten Transformator (150) zum Überführen der Oberleitungsenergie in eine Versorgungsenergie zum Betreiben der Mittelführerhauslokomotive (1) oder in eine Antriebsenergie für wenigstens einen Fahrantrieb (160) der Mittelführerhauslokomotive (1).

8. Mittelführerhauslokomotive (1) nach Anspruch 7, wobei zumindest ein Längsabschnitt des Transformators (150) in Vertikalrichtung (V) unterhalb des Mittelführerhauses (3) angeordnet ist.

9. Mittelführerhauslokomotive (1) nach Anspruch 7 oder 8, wobei sich ein Schacht, wie ein Abgasschacht und/oder Abgasschornstein (115), in der Längsrichtung (L) im Bereich des Transformators (150) und/oder zwischen dem Mittelführerhaus (3) und einem Umrichter (130) zum Überführen von Versorgungsenergie in eine Antriebsenergie für wenigstens einen Fahrantrieb (160) angeordnet ist.

10. Mittelführerhauslokomotive (1) nach Anspruch 6, wobei wenigstens eine, insbesondere den Transformator (150) mit dem Stromabnehmer (52) verbindende, Stromleitung zwischen dem Transformator (150) und dem Dach (43) des Mittelführerhauses (3), in dem Schacht geführt ist.

11. Mittelführerhauslokomotive (1), insbesondere nach einem der vorstehenden Ansprüche, umfassend: ein Mittelführerhaus (3) für einen Lokführer, wenigstens zwei Fahrgestelle (105a, 105b) und eine zwischen den zwei Fahrgestellen (105a, 105b) unterflur angeordnete oder anordenbare Traktionsbatterie (123).

12. Mittelführerhauslokomotive (1) nach einem der vorstehenden Ansprüche, umfassend wenigstens eine unterflur angeordnete Aufnahme (200) für einen Kraftstofftank (113), eine Traktionsbatterie (123) oder einen Transformator (150), und wenigstens eine Verbindungsschnittstelle zum, insbesondere lösbaren, Anbinden des Kraftstofftanks (113), der Traktionsbatterie (123) und/oder des Transformators (150).

13. Mittelführerhauslokomotive (1) nach einem der vorstehenden Ansprüche, wobei sich unterflur ein Zwischenraum von einem ersten Fahrgestell (105a) zu einem zweiten Fahrgestell (105b) erstreckt, wobei der Zwischenraum in der Längsrichtung (L) zu 10% bis 90%, vorzugsweise 15% bis 80%, besonders bevorzugt 20% bis 60%, in der Vertikalrichtung (V) unterhalb einer vom Führerstand (3) aufgespannten Fläche angeordnet ist.

14. Mittelführerhauslokomotive (1) nach Anspruch 12 und 13, wobei die wenigstens eine Verbindungsschnittstelle zum, insbesondere lösbaren, Anbinden des Kraftstofftanks (113), der Traktionsbatterie (123) und/oder des Transformators (150) in dem Zwischenraum, insbesondere in Vertikalrichtung (V) unterhalb der vom Führerstand (3) aufgespannten Fläche, angeordnet ist.

15. Mittelführerhauslokomotive (1) nach einem der Ansprüche 13 oder 14, wobei wenigstens 40%, wenigstens 50%, wenigstens 60%, wenigstens 70% oder wenigstens 80% des Zwischenraums mit wenigstens einer Traktionsbatterie (123) belegt ist.
